# EUROPÄISCHE PATENTANMELDUNG

(11) **EP 2 525 113 A2**
(43) Veröffentlichungstag der Anmeldung: **21.11.2012**
(21) Anmeldenummer: 12160031.6
(22) Anmeldetag: 19.03.2012
(51) Int. Cl.: F16F 1/10

(54) **Spiralfeder**

(30) Priorität: 16.05.2011 DE 102011075911
(71) Anmelder: Robert Bosch GmbH, 70442 Stuttgart (DE)
(72) Erfinder: Gaertner, Oliver, 74232 Abstatt (DE); Gosse, Daniel, 10115 Berlin (DE)

(57) **Zusammenfassung**

Bei einer Spiralfeder (28) mit einem im Wesentlichen in einer Ebene ausgerichteten, spiralförmigen Federelement, ist erfindungsgemäß das Federelement mit einem in Form einer Spirale gewickelten Federdraht (30) gebildet.

## Beschreibung

### Stand der Technik

Die Erfindung betrifft eine Spiralfeder mit einem im Wesentlichen in einer Ebene ausgerichteten, spiralförmigen Federelement. Ferner betrifft die Erfindung eine Spiralfederanordnung mit einer derartigen Spiralfeder.

Spiralfedern der genannten Art finden in zahlreichen Anwendungsgebieten Verwendung, da sie insbesondere aufgrund ihrer Erstreckung in einer Ebene eine besonders geringe axiale Einbautiefe benötigen. Die derart verbauten Spiralfedern federn quer zu ihrer Erstreckungsebene aus, werden also in axialer Richtung belastet.

Solche Spiralfedern werden gemäß dem allgemeinen Stand der Technik mittels Stanzen aus einem Federblech hergestellt.

### Offenbarung der Erfindung

Erfindungsgemäß ist eine Spiralfeder mit einem im Wesentlichen in einer Ebene ausgerichteten, spiralförmigen Federelement geschaffen, bei der das Federelement mit einem in Form einer Spirale gewickelten Federdraht gebildet ist.

Die erfindungsgemäße Spiralfeder ist also nicht mittels eines Stanzverfahrens hergestellt, sondern mittels eines Wickelverfahrens. Beim Wickelverfahren wird ein zu wickelndes Gut, vorliegend ein Federdraht, in mehrere Windungen um ein Zentrum herum gelegt. Die Windungen erstrecken sich nicht schraubenförmig oder konisch, sondern in einer Ebene. Der Federdraht kann gegebenenfalls so gewickelt sein, dass er in dieser ebenen Ausrichtung bereits eine gewisse, vordefinierte Vorspannung aufweist.

Das erfindungsgemäße Vorgehen ist besonders kostengünstig und dabei zugleich sehr vielseitig einsetzbar. Mittels des Wickelverfahrens können andersartige Federstrukturen ausgebildet werden, als es mittels Stanzen möglich ist. Insbesondere kann der erfindungsgemäß gewickelte Federdraht im Hinblick auf seinen Querschnitt aus einer Vielzahl an Formmöglichkeiten ausgewählt werden. Daher ist mit der erfindungsgemäßen Herstellungsweise die Produktion verschiedenster Spiralfedern möglich, die entsprechend sehr universell einsetzbar sind.

Besonders bevorzugt ist der Federdraht zumindest abschnittsweise im Querschnitt rund, insbesondere kreisrund gestaltet. Derartiger Federdraht führt zu besonders geringen Materialkosten und diese Lösung ist daher gerade im Bereich der Großserienfertigung besonders von Interesse.

Das mit dem Federdraht gebildete Federelement ist vorzugsweise ferner im Bereich seines Außenrands zumindest abschnittsweise mit mindestens zwei aneinander anliegenden Windungen gestaltet. Der derartig gestaltete Außenrand ist mit den aneinander liegenden Windungen versteift ausgestaltet, so dass in diesem Bereich eine vorteilhafte Abstützung der Spiralfeder an einer Aufnahme möglich ist.

Darüber hinaus ist vorzugsweise das mit dem Federdraht gebildete Federelement im Bereich seines Zentrums mit einer von der Spiralform abweichenden Kontur gestaltet. Diese Konturanpassung des Federdrahts im Zentrum der Spiralfeder ermöglicht eine gezielt formschlüssige und/oder kraftschlüssige Abstützung des Federelements an einem zugehörigen Bauteil in diesem Bereich.

Die Kontur kann dabei vorteilhaft auch aus der Ebene der Spiralfeder herausstehend gestaltet sein. Eine derartige Formanpassung des erfindungsgemäßen Federdrahts ist durch ein formgebendes Verfahren einfach und kostengünstig möglich.

Besonders bevorzugt ist der Federdraht nach dem Wickeln zumindest abschnittsweise mit einer Prägung versehen. Die Prägung kann definierte Abstützflächen für das Federelement bilden. Dabei kann diese Prägung vorteilhaft in Form einer Abflachung insbesondere des im Querschnitt runden Federdrahts ausgebildet sein, um insbesondere eine vergrößerte Kontaktfläche zu einem benachbarten ebenen Bauteil herzustellen.

Die Prägung ist vorzugsweise im Bereich des Außenrands des mit dem Federdraht gebildeten Federelement ausgebildet, um gerade dort eine Abstützfläche zu bilden. Die Abstützfläche erstreckt sich vorteilhaft im Wesentlichen um den gesamten Umfang des Federelements, so dass dieses vollumfänglich gehalten ist. Das derart gehaltene Federelement federt nur in seinem Zentrum axial aus und stellt daher klar vordefinierte Federkräfte bereit. Der Außenrand ist dabei vorteilhaft in einer Aufnahme derart gehalten, dass das Federelement in beide axialen Richtungen ausfedern kann, ohne seinen Kontakt zur Aufnahme zu verlassen.

Das mit dem Federdraht gebildete Federelement ist vorzugsweise im Bereich seines Außenrands zumindest abschnittsweise mit einem eckigen Querschnitt gestaltet. Es kann dann in einer Nut vorteilhaft gehalten sein, die ihrerseits mit einem kostengünstigen Herstellungsverfahren als eine im Querschnitt eckige Nut ausgebildet worden ist. Damit lässt sich auch sicher ein Herausgleiten des Federelements aus einer Aufnahme verhindern.

Die erfindungsgemäße Lösung sieht daher ferner eine Spiralfederanordnung mit einer derartigen Spiralfeder vor, bei der die Spiralfeder an einer Aufnahme im Bereich ihres Außenrands gehalten ist. Die Spiralfeder ist wie bereits angedeutet vorteilhaft insbesondere an der Aufnahme eingeklemmt. Dies kann mittels elastischer oder plastischer Verformung des Federdrahts erfolgen. Die Verformung kann durch Einpressen oder Einklipsen in einen Hinterschnitt an der Aufnahme hergestellt werden. Die Spiralfeder ist vorteilhaft auch federnd derart vorgespannt, dass das Federelement in dieser Lage komprimiert ist und alle Windungen federnd vorgespannt in einer Ebene liegen.

Ferner sieht die Erfindung eine Spiralfederanordnung mit einer derartigen Spiralfeder vor, bei der die Spiralfeder an einer Aufnahme im Bereich ihres Zentrums gehalten ist. Die in ihrer Mitte bzw. ihrem Zentrum gehaltene Spiralfeder federt dann an ihrem Randbereich axial aus. Wiederum ist die Spiralfeder vorteilhaft federnd derart vorgespannt, dass das Federelement komprimiert ist und alle Windungen in einer Ebene liegen.

Nachfolgend wird ein Ausführungsbeispiel der erfindungsgemäßen Lösung anhand der beigefügten schematischen Zeichnungen näher erläutert. Es zeigt:
Fig. 1 eine Draufsicht einer Spiralfederanordnung mit einer Spiralfeder gemäß dem Stand der Technik,
Fig. 2 eine Draufsicht einer Spiralfeder gemäß der Erfindung,
Fig. 3 eine Draufsicht einer Spiralfederanordnung gemäß der Erfindung und
Fig. 4 den Schnitt IV - IV in Fig. 2 bzw. 3.

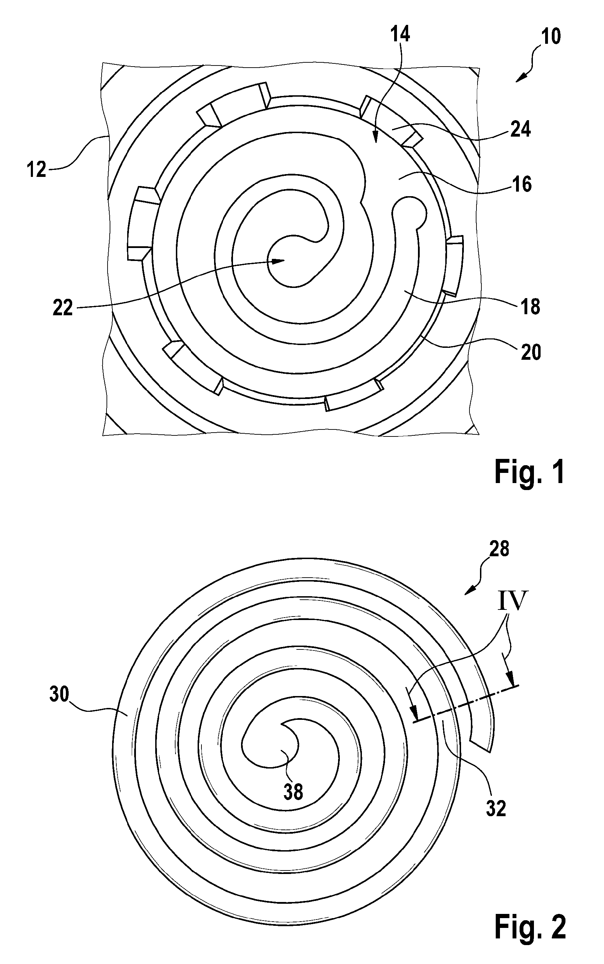

In Fig. 1 ist eine Spiralfederanordnung 10 gemäß dem Stand der Technik mit einer kreisringförmigen Aufnahme 12 und einer darin eingelegten Spiralfeder 14 gemäß dem Stand der Technik veranschaulicht. Die Spiralfeder 14 ist als Stanzteil aus einem Blech 16, vorliegend einem Federblech aus Stahl, gebildet, in dem eine das Blech 16 durchsetzende Ausstanzung 18 derart ausgeformt ist, dass das damit gebildete Federelement im Wesentlichen in einer Ebene ausgerichtete und spiralförmige Federwindungen aufweist.

Dabei weist die aus dem Blech 16 gebildete Spiralfeder 14 einen kantigen Au-βenrand 20 auf und ist in ihrem Zentrum 22 mit einer relativ zur Breite der Federwindungen vergrößerten Anlagenfläche für ein abzufederndes (nicht dargestelltes) Bauteil versehen.

Die Spiralfeder 14 ist an ihrem Außenrand 20 mittels sechs Klemmelementen 24 gehalten, die über den Umfang der Aufnahme 12 gleichmäßig verteilt sind.

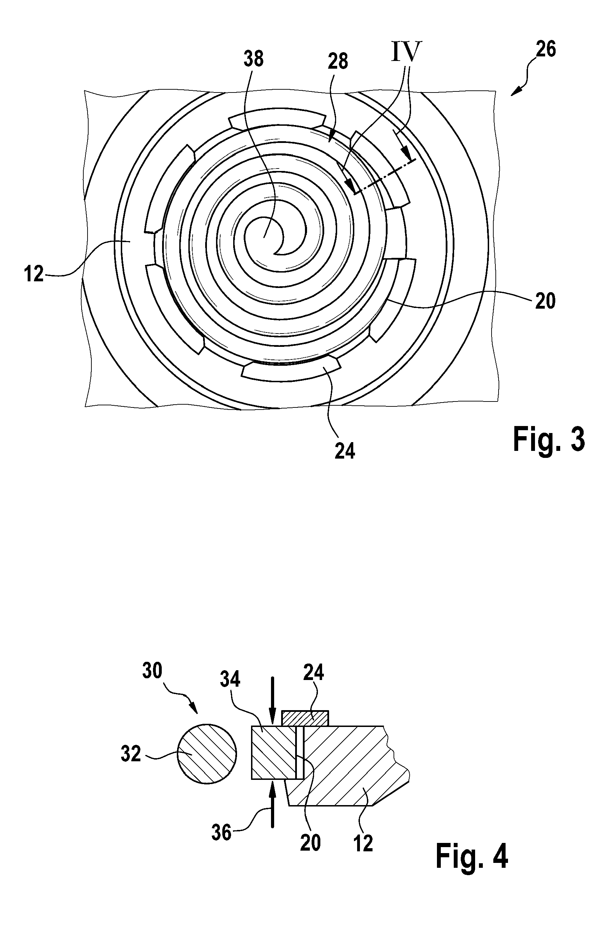

In Fig. 3 ist eine Spiralfederanordnung 26 gemäß der Erfindung dargestellt, die eine in Fig. 2 gesondert veranschaulichte Spiralfeder 28 gemäß der Erfindung enthält.

Die Spiralfederanordnung 26 weist ebenfalls eine Aufnahme 12 mit Klemmelementen 24 auf, welche die Spiralfeder 28 in der Aufnahme 12 an ihrem Außenrand 20 zurückhalten. Die Spiralfeder 28 ist mit einem Federdraht 30 hergestellt, der in Form einer Spirale gewickelt worden ist.

Der Querschnitt dieses Federdrahts 30 ist im unverformten Zustand dabei weitgehend rund, insbesondere kreisrund. Im Bereich des Außenrands 20 ist die Spiralfeder 28 mit einem Querschnitt 34 versehen worden, der weitgehend eckig, insbesondere rechteckig ist. Diese Querschnitt 34 ist mittels einer Prägung 36 des Federdrahts 30 nach dessen Wickeln hergestellt worden. Ferner ist die Wicklung derart ausgebildet worden, dass im Bereich des Außenrands 20 zumindest abschnittsweise zwei Federwindungen der Spiralfeder 28 aneinander anliegen.

Mit der Prägung 36 ist auch das Zentrum der Spiralfeder 28 derart verformt worden, dass sich in diesem eine im Vergleich zum restlichen Querschnitt in der Draufsicht flächenmäßig vergrößerte Kontur 38 ergibt. Diese Kontur 38 kann vorteilhaft auch so ausgebildet sein, dass sich das Material der Spiralfeder 28 aus deren ebenen Erstreckung heraus und quer dazu erstreckt.

## Patentansprüche

1. Spiralfeder (28) mit einem im Wesentlichen in einer Ebene ausgerichteten, spiralförmigen Federelement,
bei der das Federelement mit einem in Form einer Spirale gewickelten Federdraht (30) gebildet ist.

2. Spiralfeder nach Anspruch 1,
**dadurch gekennzeichnet, dass** der Federdraht (30) zumindest abschnittsweise im Querschnitt (32) rund, insbesondere kreisrund gestaltet ist.

3. Spiralfeder nach Anspruch 1 oder 2,
**dadurch gekennzeichnet, dass** das mit dem Federdraht (30) gebildete Federelement im Bereich seines Außenrands (20) zumindest abschnittsweise mit zwei aneinander anliegenden Windungen gestaltet ist.

4. Spiralfeder nach einem der Ansprüche 1 bis 3,
**dadurch gekennzeichnet, dass** das mit dem Federdraht (30) gebildete Federelement im Bereich seines Zentrums mit einer von der Spiralform abweichenden Kontur (38) gestaltet ist.

5. Spiralfeder nach Anspruch 4,
**dadurch gekennzeichnet, dass** die Kontur (38) aus der Ebene der Spiralfeder herausstehend gestaltet ist.

6. Spiralfeder nach einem der Ansprüche 1 bis 5,
**dadurch gekennzeichnet, dass** der Federdraht (30) nach dem Wickeln zumindest abschnittsweise mit einer Prägung (36) versehen ist.

7. Spiralfeder nach Anspruch 6,
**dadurch gekennzeichnet, dass** die Prägung (36) im Bereich des Außenrands des mit dem Federdraht (30) gebildeten Federelement ausgebildet ist.

8. Spiralfeder nach einem der vorhergehenden Ansprüche,
**dadurch gekennzeichnet, dass** das mit dem Federdraht (30) gebildete Federelement im Bereich seines Außenrands (20) zumindest abschnittsweise mit einem eckigen Querschnitt (34) gestaltet ist.

9. Spiralfederanordnung (26) mit einer Spiralfeder (28) nach einem der Ansprüche 1 bis 8, bei der die Spiralfeder (28) an einer Aufnahme (12) im Bereich ihres Außenrands (20) gehalten ist.

10. Spiralfederanordnung (26) mit einer Spiralfeder (28) nach einem der Ansprüche 1 bis 8, bei der die Spiralfeder (28) an einer Aufnahme (12) im Bereich ihres Zentrums gehalten ist.
